# EUROPEAN PATENT SPECIFICATION

(11) **EP 2 025 105 B1**
(45) Date of publication and mention of the grant of the patent: **23.12.2015**
(21) Application number: 06742898.7
(22) Date of filing: 12.05.2006
(51) Int. Cl.: H04L 12/801, H04L 12/803, H04L 12/923, H04L 12/911

(54) **CALL ADMISSION CONTROL METHOD**
RUFZULASSUNGSSTEUERVERFAHREN
PROCÉDÉ DE COMMANDE D'ADMISSION D'APPEL

(43) Date of publication of application: 18.02.2009
(73) Proprietor: Telefonaktiebolaget L M Ericsson (publ), 164 83 Stockholm (SE)
(72) Inventor: PONGRÁCZ, Gergely, H-1138 Budapest (HU); SERES, Gergely, H-1025 Budapest (HU); ELTETÖ, Tamás, H-1173 Budapest (HU)
(74) Representative: Gray, Helen Mary
(86) International application number: PCT/EP2006/004486
(87) International publication number: WO 2007/131518

(56) References cited:
- EP-A1- 1 641 232
- WO-A-2004/092927
- WO-A-2005/062556
- WO-A-2006/015939
- US-A1- 2005 052 996

## Description

### Field of invention

The present invention relates to the admission control of voice and multimedia calls onto packet-switched internet protocol (IP) networks in order to maintain call quality.

### Background art

When real-time traffic such as voice or multimedia traffic is carried over a packet-switched core network, such as an internet protocol (IP) based network or a pure L2 Ethernet, some provision must be made to provide the necessary quality of service. For transmission over packet-switched IP networks, voice or multimedia data must be broken up into discrete packets, which may travel over different network paths to the final destination before being reassembled in the correct sequence. The transmission speed between any two end points can vary enormously depending on the amount and type of traffic carried at any one time by the network, as well as the network design and capabilities. Previously, IP networks could offer only a "best effort" quality of service, where no differentiation was made between traffic types within a network element and packets were routinely dropped in the event of congestion.

More recently, IP networks are offering some quality of service guarantees. The Differentiated Services scheme (DiffServ) proposed by the Internet Engineering Task Force (IETF) enables traffic to be separated according to quality of service, and by using a marker in the header of each IP packet allows network routers to apply differentiated grades of service to various traffic streams. However, this concept cannot guarantee that resources are available throughout the network. In particular, while edge nodes to the core network are able to control the number of calls admitted to the network, congestion can still occur on bottleneck links in the uncontrolled core of the network.

This last problem can be alleviated by using reservation based protocols such as the resource reservation Protocol (RSVP) proposed in conjunction with the IETF Internet Integrated Services framework (IntServ). RSVP enables connections or resources on the Internet to be reserved in the nodes or routers along the transmission path. Specifically, a resource reservation message is issued by an edge node on receipt of a call establishment message. This message travels through the core of the network, and each router along the path examines the request and reserves the necessary resources. If resource reservation is successful, and the issuing edge node receives an acknowledgement back, the call establishment proceeds towards the remote edge node. However, it is clear that this mechanism requires per-flow states to be installed in each core network route and hence greatly increases the required complexity of all network nodes, not only at the edge of the network but also in the network core. In large networks, the overheads due to signalling and internal data processing can become unacceptable. Moreover, the time required for the resource reservation message to travel back and forth in the core network can significantly delay the call establishment message.

A third form of admission control utilises transmission quality information obtained for specific links within a packet switched internet protocol (IP) network to decide whether a call should proceed across this link.

EP-A-0 999 674 describes a mechanism wherein bandwidth is allocated to specific classes of traffic to ensure the required quality of service. The available bandwidth for a path is monitored and for each new voice or other delay sensitive call received, a signalling gateway determines whether the remaining bandwidth is sufficient to permit the call to proceed. While this method offers good quality of service for delay sensitive traffic, the ongoing bandwidth monitoring for specific paths and specific traffic classes involves a high level of data processing and signalling, which causes delays. Moreover, the allocation of bandwidth to specific traffic classes may also lead to the under-utilisation of a link.

WO 99/66682 describes an arrangement for controlling the connection of telephone calls over an IP network or over an alternative network. Quality of service statistics obtained from a network monitor are consulted using the destination of a call to be routed over the IP network. These statistics are obtained using test packets routed to the same destination. If these statistics match those desired for the call, the call is allowed to proceed over the IP network, otherwise it is routed over an alternative network. The transmission of a test packet delays call establishment because the test packet must travel through the network and back again before the decision to admit the call can be made. Moreover, since such test packets are typically marked by congested routers along the path, each core network router needs to be aware of the mechanism and be adapted to act accordingly.

EP-A-1 168 755 describes a call control mechanism that uses a monitoring mechanism to measures statistics for specific performance indicators over a link, such as packet loss and jitter. The monitoring mechanism proposed is the real time control protocol RTCP, which is used in conjunction with the real time protocol (RTP) for carrying real time traffic over an IP network. The statistics are obtained for a number of ongoing calls and averaged. When an incoming call is received, the obtained statistics relating to one or a combination of performance indicators are compared with a threshold level, and the call is routed over the IP network only when the measured performance indicators are below the threshold level. This approach leads to a fast response time, but this comes at the expense of instability, as the utilisation of the controlled link will oscillate heavily. Specifically, when a link enters the blocked state all calls are transferred to alternative unrestricted links. When the link is no longer congested, all incoming calls are again accepted until the link quality becomes unacceptable.

EP 1 641 232 A describes a call control arrangement wherein a fraction of new calls are permitted depending on the measured link utilisation. The link utilisation is compared with two threshold levels and the allowed fraction of new calls set or changed in dependence on whether the link utilisation is above or below the two thresholds. In particular, if the link utilisation is between the thresholds, it is determined whether the link utilisation is rising or falling by comparison with a previous link utilisation. If falling, the fraction of new calls is increased by a fixed additive factor, if it is rising, the fraction of new calls is unchanged. When the link utilisation is above the high threshold, the fraction of new calls is reduced by a fixed multiplicative factor if the link utilisation is increasing, otherwise it is left unchanged. When the link utilisation is below the low threshold, all new calls are admitted.

In the light of the prior art systems described above it is an object of the present invention to provide a method and arrangement of call control that alleviates the above problems.

It is a further object of the present invention to provide a method and arrangement of call control that is capable of reacting rapidly to any change in the congestion of a link while remaining stable.

It is a still further object of the present invention to provide a method and arrangement of call control that that offers a good utilisation of the network even in a situation of high congestion, that provides acceptable voice quality even on bottleneck links and that can be implemented entirely in an edge node of the network, i.e. it does not require additional algorithms or mechanisms within in the core network, such as signalling and resource reservation.

### SUMMARY OF THE INVENTION

The above objects are achieved in a method and arrangement as defined in the appended claims.

Adapting the restriction factor in dependence on the difference between the current load condition and the first or previous load condition as determined by the performance indicators allows any change in call admission to be implemented at a level that best suits the rate of change of congestion. Accordingly, a dramatic change from a very low load condition to a very high load condition will result in a different updated restriction factor from a change from a moderate load condition to a very high load condition. The system is thus inherently stable, yet able to react rapidly to changes in load on a network path while optimising the utilisation of the path.

Preferably, the load on a path is classified into load categories on the basis of the measured transmission performance indicators. Hence each load level is expressed as a category rather than a single performance indicator value. Essentially, the useful range of performance indicators is divided into sub-ranges, each sub-range corresponding to a single load category. The restriction factor adjustment is thus dependent on the difference between a current load category and a load category applied just previously.

The adjustment of the restriction is usefully performed with the aid of a table that contains restriction factor adjustment values, each of which is addressable with the current load level or category and the previous load level, or category.

In the preferred embodiment, the performance indicators used are jitter and packet loss.

In accordance with a preferred embodiment of the present invention, jitter or packet loss is used as a transmission performance indicator, and preferably wherein jitter and packet loss are used as transmission performance indicators and wherein jitter is used to determine the traffic load level when packet loss is below a predetermined level.

Jitter has been found to be an effective early indicator of traffic load before packet loss becomes significant. Accordingly, utilising jitter measurements to determine the traffic load and control the call admission at these early stages of path congestion allows the system to respond rapidly and proactively to any change in the load condition before a significant degradation of call quality can be perceived.

### BRIEF DESCRIPTION OF THE DRAWINGS

Further objects and advantages of the present invention will become apparent from the following description of the preferred embodiments that are given by way of example with reference to the accompanying drawings. In the figures:
- Fig. 1: schematically illustrates an internet telecommunications network for transporting voice and multimedia applications,
- Fig. 2: schematically illustrates the relationship between functional elements of the media gateways of Fig. 1,
- Fig. 3: is a graph showing the relationship between jitter and traffic load on a link over an IP network,
- Fig. 4: is a table defining load categories based on jitter and packet loss measurements
- Fig. 5: is a table defining restriction factors for specific paths,
- Fig. 6: is a flow chart of an algorithm for adjusting the restriction factor, and
- Fig.7: is a table of restriction factor adjustment values.

### DETAILED DESCRIPTION OF THE DRAWINGS

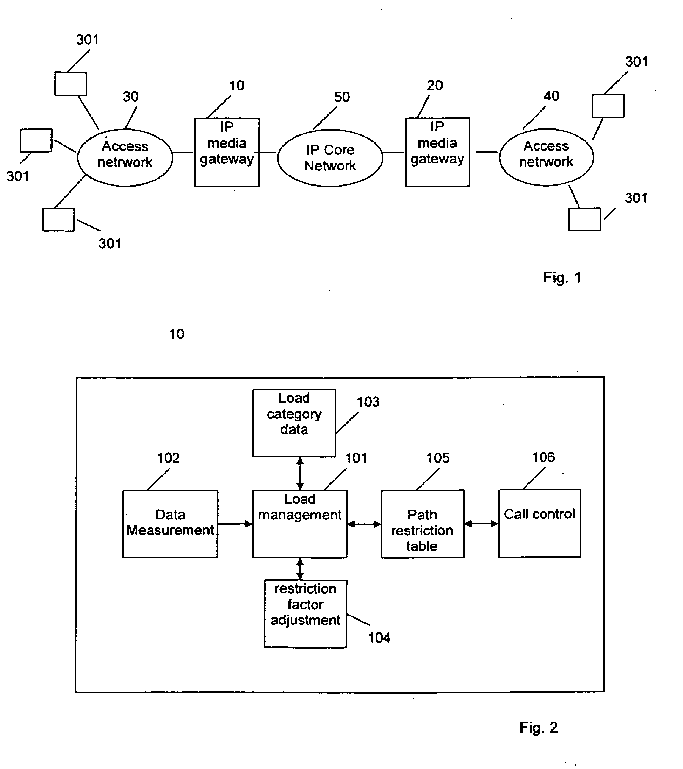

Fig. 1 shows an exemplary arrangement for providing multimedia communication over an internet protocol (IP) or other packet switched network. In the illustrated arrangement a plurality of subscribers 301 are connected to a first access network 30, which provides access to an IP core network 50 using an IP media gateway 10, which acts as an IP network edge node. Another IP media gateway 20 connects a second access network 40 to the IP core network 50. This second access network 40 also is connected to a plurality of subscribers 401. It will be understood, that many other access networks may be connected to the IP core network via similar gateways or via alternative edge nodes. The subscribers 301 and 401 may include fixed line telephones, cellular telephones, PCs or other multimedia equipment. The arrangement and specifically the media gateways 10, 20 are capable of handling delay sensitive traffic, such as voice and video as well as non-delay sensitive data. In order to be able to handle delay sensitive traffic effectively, the system operates a differentiated services scheme (DiffServ) to enable such traffic to be identified and handled in a separate manner from non-delay-sensitive traffic. The differentiated services scheme is described in S. Blake et al., "An Architecture for Differentiated Services", RFC 2475, December 1998. Such traffic is typically carried using the real time protocol RTP with the added mechanism provided by the real time control protocol (RTCP). RTP and the RTCP mechanism is described in H. Schulzrinne et al., "RTP: A transport protocol for real-time applications", RFC 1889, January 1996.

Turning now to Fig. 2 there are shown various functional elements of the IP media gateway 10 of Fig. 1. The figure does not illustrate all elements of such an IP media gateway, but simply shows those elements relevant for the present invention. Moreover, the figure is not intended to provide a representation of the fixed structural relationship between these elements nor to limit the manner in which these functions can be implemented. The depiction of the various elements as separate entities is simply to facility the explanation of the invention. It will be understood by those skilled in the art that the various functions may be combined in a different manner or further separated without changing the nature of the operation.

In accordance with the present invention, the system illustrated in Fig. 2 takes measurements on various quality related measurements on ongoing active calls and uses these measurements to influence future routing decisions. More specifically, if the improvement or degradation of the load condition of a specific link is detected based on measurements taken on ongoing calls using this link in conjunction with previous load condition data, the number of new calls allowed to proceed over the link is restricted to a greater or lesser degree depending on the change in traffic load. In achieving this operation, two elements are central to the handling and routing of delay sensitive calls over the IP network 50. These elements are a load management processing module 101 and a call control module 106. These elements are depicted as separate and distinct elements, however, this is not intended to limit the implementation of these functions. The processing function of these elements may well be performed in the same central processing device with access to a storage medium.

The load management processing module 101 determines the load on each path utilised by delay sensitive traffic over the IP core network 50 and allocates a restriction to be applied to each path. On receipt of an incoming call, the call control processing module 106 fetches the relevant restriction factor allocated to the path required by the call and makes a decision on whether to allow call establishment to proceed based on this restriction factor.

In the preferred embodiment the restriction applied to the supervised paths is a percentage restriction, whereby n out of every 100 calls over the link is permitted to proceed. This is expressed by a restriction factor r, which has a value from 0 up to and including 100. The percentage restriction on a specific path is then represented by 100 -r.

Other forms of restriction are also possible. These include restrictions on the traffic level or on the traffic rate. Under traffic level restriction, the traffic level on the supervised path will only be allowed to reach a certain level based on the measured load. Under traffic rate restriction, the number of calls that may be set up within a certain period is limited to a specific value based on the measured load condition.

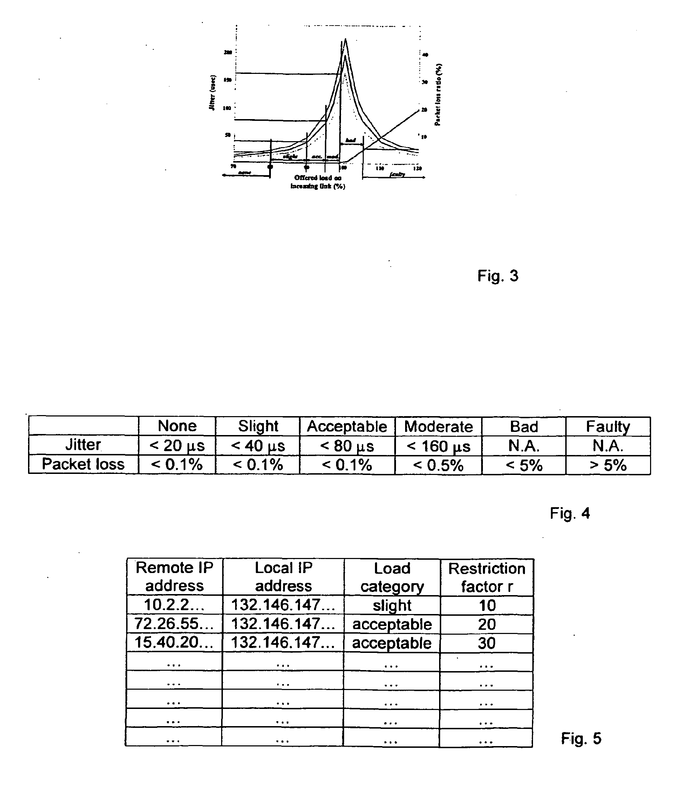

Turning again to Fig. 2, the load management processing module 101 is in communication with a data measurement module 102. The data measurement module collects data relating to the quality of service (QoS) of ongoing calls. It will be understood that this module may also be combined in a single processing device together with the load management processing module 101. The QoS data is separated into specific paths, identified by the source and destination IP application addresses used for the calls. More specifically, the path is determined using the IP addresses of interfaces in the edge devices 10, 20 of the core network 50. The QoS data is obtained using the real time control protocol RTCP, which enables the gathering of statistics on various quality or load indicators, such as jitter and packet loss, of an RTP session, but also on an individual call basis. For the present invention, the load indicators used are jitter and packet loss. Jitter is the small or random variation in time of phase of a transmitted signal. It is expressed in time and represents the difference in the spacing between packets at the sending node to the spacing between packets at the receiving node. Packet loss data is derived from packet sequence numbers. It is expressed as a percentage value. Data relating to jitter and packet loss is derived from RTP counters. The data measurement module 102 samples jitter and packet loss data on all or a proportion of ongoing calls on supervised paths over a certain measurement period. At the end of this measurement period the data is sent to the load management processing module 101. Each measurement period lasts for around 5 seconds, but may be more or less depending on the load on the network and the processing delay that can be tolerated. Using the measurement data received, the load management processing module 101 classifies the monitored path according to specific load categories using information from load category data module 103. This is illustrated in Figs. 3 and 4.

It is well known that packet loss has a severe effect on the perceived quality of a voice call. Jitter, on the other hand, while it can result in a loss of synchronisation at high levels, does not affect voice quality of a call. However, it has been found that jitter is nevertheless an early indicator of degradation in the transmission quality of a path, as a result of increased traffic load. This is illustrated in the graph of Fig. 3. This graph is a plot of jitter and packet loss against the percentage offered load on a link in an IP network. Jitter measurement has some deviation, so the graph shows the maximum and minimum values as well as the average jitter levels. It can be seen from the graph that jitter levels increase significantly well before 100% load is reached on the link. Packet loss, on the other hand, is very low up to this point and then suddenly increases. Jitter can thus provide an effective early warning of impending path quality degradation enabling the call control system to operate proactively before significant packet loss occurs and call quality deteriorates. More specifically, when the percentage packet loss is below a predetermined level, namely below 0.5 %, and preferably below 0.1 %, jitter can be used alone to determine the load conditions on the monitored path. Moreover, simulations have demonstrated that jitter is essentially independent of node parameters, at least for buffer sizes of 64kB (around 500 packets, depending on packet length) and over.

Turning again to Fig. 3, the load has been divided into six categories, starting from "none", through "slight", "acc" (acceptable), "mod" (moderate), "bad" to "faulty". The lower load categories from "none" to "moderate" are defined primarily by the jitter levels because the packet loss levels are essentially unchanged or negligible at these levels of load. Above this load level, the jitter is no longer reliable as sole indicator and packet loss is used to define the two highest load categories. The table in Fig. 4 shows the classification of a path into a specific load category on the basis of jitter and packet loss levels. The entry N/A indicates that the data is not applicable for this category of load. As already mentioned, all measurements are performed on a number of ongoing calls and the results averaged. In addition, it is possible to determine the load category according to jitter and packet loss measurements separately, and if they differ, to select the worst category.

The load category data module 103 of Fig. 2 contains the information of the table in Fig. 3. The load management processing module 101 uses this load category data to classify the supervised paths on the basis of the measured data relating to packet loss and jitter received. Using this load category, the load management processing module 101 determines the restriction factor, r, applicable to the supervised path and updates the current values of restriction factor and load category in a path restriction table 105. This table is illustrated in Fig. 5. This table provides a mapping between the remote and local IP application addresses, which define specific paths, and the current load category and restriction factor. The IP application address information may be the complete address or address prefixes that can be defined by operators. This information could also be grouped according to source and destination edge nodes in the IP core network.

The call control processing module 106 uses the current restriction factor applied to a specific path in the IP core network to decide whether ran incoming call should be allowed to proceed. More specifically, when an incoming call that requires routing over the IP core network is received by the call control processing module 106, this module 106 accesses the path restriction table 105 to retrieve the current restriction factor applicable to the link defined by the local and remote IP application addresses for the received call. This restriction factor is then used to determine a percentage probability that the call will be allowed to proceed using the relationship 100(1-r)%. For example, if a path has a restriction factor of 20, the call would have an 80% chance of being processed. The decision on whether to allow the call to proceed may be made by the call control processing module 105 simply by generating a random number between 1 and 100 and granting the call establishment if the generated number is over 20, for example.

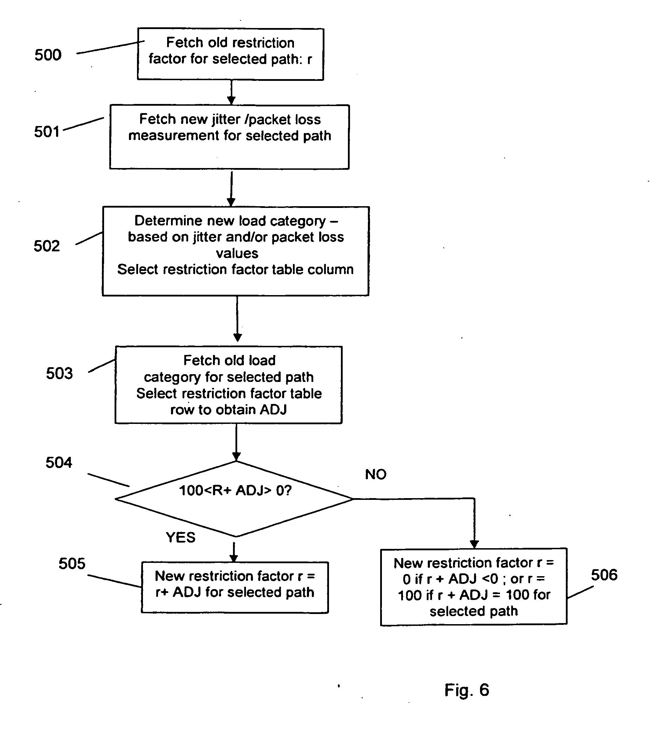

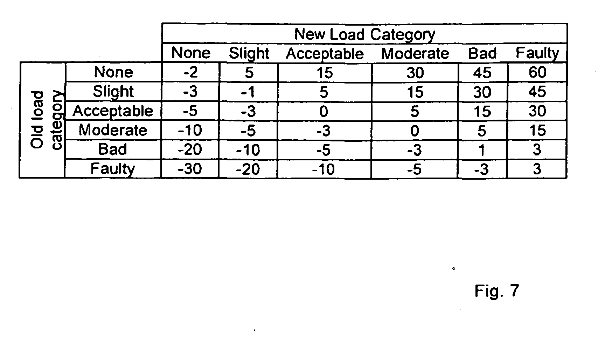

The mechanism for determining the restriction factor is illustrated in Figs. 6 and 7. As mentioned earlier, a current restriction factor is determined on the basis of the last obtained load indicators for the link, i.e. the jitter and/or packet loss, but also on the basis of the last applied load category.

Accordingly, a restriction factor is adjusted based on a new load category and the last applied load category. The adjustment values ADJ for the restriction factor is given in a table in Fig. 7. The columns in Fig. 7 relate to the new load category and the rows relate to the previous or old load category. The adjustment values ADJ in the table are added to the last applied (old) restriction factor to obtain a new restriction factor. It can be seen from the table that the adjustment values ADJ in the diagonal from top left to bottom right are small. These relate to the cases where the load category is unchanged. However, only when the load categories "acceptable" and "moderate" are sustained is the restriction factor also unchanged. This allows the operator to encourage the utilisation of a link by increasing the number of calls that may be carried by the link while the load conditions remain low. It will be understood that the choice of adjustment values in the table of Fig. 7 permits the operator to configure a large or small restriction change in dependence on the actual load condition of the path. In particular, the degree of change in restriction factor can be made dependent on the degree of change of the load condition and not simply on the absolute load condition. In other words, a load condition change from "slight" to "faulty" can generate a far greater adjustment in the restriction factor than a change from "bad" to "faulty". This allows the system to respond rapidly to sudden changes in the call arrival rate while maintaining an optimal level of link utilisation and while remaining stable.

Fig. 6 is a flow diagram representing the process of adjusting the restriction factor for each specific path. This process starts at step 500 with the load management processing module 101 fetching the old restriction factor applied to the specific path from the path restriction table 105 (Fig. 5). At step 501, the load management processing module 101 fetches or receives the new measurement data relating to jitter and packet loss over the selected path from the data measurement module 102. At step 502, the load management processing module 101 determines the new load category from the measurement data using the data in table 103 (Fig. 4), and then selects the column of restriction factor adjustment table 104 (Fig. 7). At step 503, the load management processing module 101 fetches the old load category from the path restriction table 105 and uses this to select the appropriate row of the restriction factor adjustment table 104 (Fig. 7) to obtain the adjustment value ADJ. At step 504 it is ascertained that the new restriction factor will be within the allowable boundaries of ≥0 and ≤ 100. If this is true, the new restriction factor is calculated at step 505 by adding the adjustment value to the old restriction factor r = r + ADJ. Otherwise, the process goes to step 506 and the restriction factor is set at the appropriate boundary value, namely to 0 if r+ADJ < 0 or to 100 if r + ADJ > 100.

The restriction factor adjustment algorithm illustrated in Fig. 6 is repeated after each measurement period for each supervised path.

When a path is used for the first time, and no previous measurements, load category or restriction factor is available, it is assigned a default restriction factor of "0" permitting 100% of incoming calls to be routed over the path. In addition, the load category assigned to the path is "none". This path as defined by the local and remote IP application addresses is also entered in the path restriction table 105 for use in the next measurement period.

The various tables described with reference to Fig. 2 have been described as separate elements, however, these tables could well be located on the same storage medium accessible by a central processing device.

In the above description, six load categories are defined. It will be understood, however, that more or fewer categories may be used depending on the available processing capability and reaction requirements of the system.

## Claims

1. A method of controlling the admission of calls onto at least one path in a packet-switched network, said method including the steps of:
applying a restriction factor to calls using said path, said restriction factor having a range of at least three possible values and restricting the number of new calls permitted to utilise said path to a first predetermined level, and being set on the basis of a first level of traffic load on said path;
measuring transmission performance indicators for ongoing calls on said path to determine a current level of traffic load on said path;
determining an updated restriction factor on the basis of said determined current traffic load level and applying said updated restriction factor to calls using said path, said updated restriction factor restricting the number of new calls permitted to utilise said path to a second predetermined level, wherein said second predetermined level is different from said first predetermined level, **characterised in that** said step of determining an updated restriction factor further includes the step of adjusting said restriction factor by adding an adjustment value to obtain said updated restriction factor, said adjustment value being dependent on the difference between said first traffic load level and said current traffic load level.

2. A method as claimed in claim 1, wherein the step of measuring transmission performance indicators for ongoing calls on said path includes measuring said transmission performance indicators for ongoing calls for a predetermined time period and determining said current traffic load level at the end of said predetermined time period.

3. A method as claimed in claim 1, wherein said step of adjusting said restriction factor includes:
utilising a table containing restriction factor adjustment values, each value in said table being addressable with said first traffic load level and said current traffic load level, and adding said adjustment value to said restriction factor to obtain said updated restriction factor.

4. A method as claimed in any one of claims 1 to 3, wherein jitter or packet loss is used as a transmission performance indicator, and preferably wherein jitter and packet loss are used as transmission performance indicators and wherein jitter is used to determine the traffic load level when packet loss is below a predetermined level.

5. A method as claimed in any previous claim, wherein said traffic load level is expressed as one of a plurality of load categories, each load category being defined by a range of transmission performance indicator values and indicating a traffic load condition, and preferably wherein the load category of said path is determined separately using jitter and packet loss measurements, and the worst load category selected as the load category.

6. A method as claimed in any previous claim, wherein said restriction factor is a percentage restriction factor, which determines the percentage of calls permitted to use the transmission path and preferably wherein the restriction factor r has a value from 0 up to 100 and wherein an average of 100-r new incoming calls out of 100 are permitted to use the monitored path, or wherein said restriction factor is a traffic level restriction factor, which determines the maximum number of calls permitted to utilise the monitored path at any one time or wherein the restriction factor is a maximum traffic level increment restriction factor, which determines the number of calls that may be set up in a certain time period.

7. An arrangement for controlling the admission of calls onto at least one path in a packet-switched network, said arrangement including:
a load management processor (101) adapted to assign a restriction factor to calls using said path, said restriction factor being related to a first transmission load level on said path and having a range of at least three possible values,
a call control processor (106) adapted to restrict the number of new calls permitted to utilise said path to a first predetermined level defined by said restriction factor; and
a data measurement module (102) in communication with said load management processor for measuring transmission performance indicators for ongoing calls,
wherein said load management processor (101) is adapted to determine a current transmission load level on said path on the basis of said measured transmission performance indicators and to update said restriction factor for said path, wherein said updated restriction factor restricts the number of new calls permitted to utilise said path to a second predetermined level that is different from said first predetermined level, **characterised in that** said load management processor is adapted to update said restriction factor by the addition of an adjustment value which is dependent on the difference between said first traffic load level and said current traffic load level.

8. An arrangement as claimed in claim 7, further including a first storage medium (104) in communication with said load management processor (101) said first storage medium containing data relating to said restriction factor, said load management processor being adapted to access said first storage medium (104) using said current transmission load level and said first transmission load level and to generate said updated restriction factor using data contained in said storage medium, preferably wherein said first storage medium comprises a table (104) containing said restriction factor adjustment values, said table being accessible by said load management processor (101), and said load management processor (101) being adapted to address said table using said current load category and said previous load category.

9. An arrangement as claimed in claim 7 or 8, further including a second storage medium for storing a table (105) containing restriction factor values for each supervised path, said path restriction table being accessible by said load management processor (101) and said call control processor (106), wherein said load management processor (101) is adapted to update said table by replacing said restriction factor value with said updated restriction factor value and wherein said call control processor (106) is adapted to consult said table on receipt of an incoming call to obtain the restriction factor for the path required by said call and preferably wherein said load management processor (101) is further adapted to write a current transmission load level for each path in said path restriction table (105).

10. An arrangement as claimed in any one of claims 7 to 9, wherein said load control processor and said call control processor are formed by a single processing device and preferably wherein said data measurement module is comprised within said single processing device.

11. An arrangement as claimed in any one of claims 7 to 10, wherein a transmission load level is expressed as one of a plurality of load categories, wherein each load category indicates a load condition on said path and is defined by a range of transmission performance indicator values.

12. An arrangement as claimed in any one of claims 7 to 11 wherein said data measurement module (102) is adapted to measure jitter and packet loss for ongoing calls, and wherein said load management processor (101) is adapted to ascertain whether packet loss is below a predefined level, and to determine a current transmission load level on said path on the basis of said measured jitter alone when packet loss is below said predefined level.

## Patentansprüche

1. Verfahren zum Steuern des Zulassens von Anrufen auf mindestens einen Pfad in einem paketvermittelten Netzwerk, wobei das Verfahren die folgenden Schritte beinhaltet:
Anwenden eines Einschränkungsfaktors auf Anrufe, die den Pfad benutzen, wobei der Einschränkungsfaktor einen Bereich von mindestens drei möglichen Werten aufweist und die Anzahl an neuen Anrufen, die den Pfad benutzen dürfen, auf einen ersten vorbestimmten Level beschränkt, und auf der Basis eines ersten Levels von Verkehrslast auf dem Pfad eingestellt ist;
Messen der Übertragungsleistungsindikatoren für laufende Anrufe auf dem Pfad, um einen aktuellen Level der Verkehrslast auf dem Pfad zu bestimmen;
Bestimmen eines aktualisierten Einschränkungsfaktors auf der Basis des bestimmten aktuellen Verkehrslastlevels und Anwenden des aktualisierten Einschränkungsfaktors auf Anrufe, die den Pfad benutzen, wobei der aktualisierte Einschränkungsfaktor die Anzahl von neuen Anrufen, die den neuen Pfad benutzen dürfen, auf einen zweiten vorbestimmten Level beschränkt, wobei der zweite vorbestimmte Level sich von dem ersten vorbestimmten Level unterscheidet, **dadurch gekennzeichnet, dass** der Schritt des Bestimmens eines aktualisierten Einschränkungsfaktors des Weiteren den Schritt des Anpassens des Einschränkungsfaktors durch Hinzufügen eines Anpassungswertes beinhaltet, um den aktualisierten Einschränkungsfaktor zu erhalten, wobei der Anpassungswert von dem Unterschied zwischen dem ersten Verkehrslastlevel und dem aktuellen Verkehrslastlevel abhängt.

2. Verfahren nach Anspruch 1, wobei der Schritt des Messens der Übertragungsleistungsindikatoren für laufende Anrufe auf dem Pfad das Messen der Übertragungsleistungsindikatoren für laufende Anrufe über einen vorbestimmten Zeitraum und das Bestimmen des aktuellen Verkehrslastlevels am Ende des vorbestimmten Zeitraumes beinhaltet.

3. Verfahren nach Anspruch 1, wobei der Schritt des Anpassens des Einschränkungsfaktors beinhaltet:
Verwenden einer Tabelle, die Anpassungswerte des Einschränkungsfaktors enthält, wobei jeder Wert in der Tabelle mit dem ersten Verkehrslastlevel und dem aktuellen Verkehrslastlevel adressierbar ist, und Hinzufügen des Anpassungswertes zu dem Einschränkungsfaktor, um den aktualisierten Einschränkungsfaktor zu erhalten.

4. Verfahren nach einem der Ansprüche 1 bis 3, wobei Jitter oder Paketverlust als ein Übertragungsleistungsindikator verwendet wird, und vorzugsweise, wobei Jitter und Paketverlust als Übertragungsleistungsindikatoren verwendet werden, und wobei Jitter verwendet wird, um den Verkehrslastlevel zu bestimmen, wenn Paketverlust unter einem vorbestimmten Level liegt.

5. Verfahren nach einem vorhergehenden Anspruch, wobei der Verkehrslastlevel als eine einer Vielzahl von Lastkategorien ausgedrückt wird, wobei jede Lastkategorie durch einen Bereich von Übertragungsleistungsindikatorwerten definiert ist und einen Verkehrslastzustand angibt, und wobei vorzugsweise die Lastkategorie des Pfades unter Verwendung von Jitter- und Paketverlustmessungen getrennt bestimmt wird, und die schlechteste Lastkategorie als die Lastkategorie ausgewählt wird.

6. Verfahren nach einem vorhergehenden Anspruch, wobei der Einschränkungsfaktor ein Prozentsatz-Einschränkungsfaktor ist, welcher den Prozentsatz von Anrufen bestimmt, die den Übertragungspfad benutzen dürfen, und wobei vorzugsweise der Einschränkungsfaktor einen Wert von 0 bis zu 100 aufweist, und wobei ein Durchschnitt von 100-r neuen eingehenden Anrufen von 100 den überwachten Pfad benutzen dürfen, oder wobei der Einschränkungsfaktor ein Verkehrslast-Einschränkungsfaktor ist, der die maximale Anzahl an Anrufen bestimmt, die den überwachten Pfad zu jeder Zeit benutzen dürfen, oder wobei der Einschränkungsfaktor ein maximaler Verkehrslastinkrement-Einschränkungsfaktor ist, welcher die Anzahl an Anrufen bestimmt, die in einem gewissen Zeitraum aufgebaut werden dürfen.

7. Anordnung zum Steuern des Zulassens von Anrufen auf mindestens einen Pfad in einem paketvermittelten Netzwerk, wobei das Verfahren Folgendes beinhaltet:
einen Lastverwaltungsprozessor (101), der dazu eingerichtet ist, einen Einschränkungsfaktor für Anrufe, die den Pfad benutzen, zuzuweisen, wobei der Einschränkungsfaktor sich auf einen ersten Übertragungslastlevel auf dem Pfad bezieht und einen Bereich von mindestens drei möglichen Werten aufweist,
einen Anrufsteuerungsprozessor (106), der dazu eingerichtet ist, die Anzahl an neuen Anrufen, die den Pfad benutzen dürfen, auf einen ersten vorbestimmten Level zu beschränken, der durch den Einschränkungsfaktor definiert ist; und
ein Datenmessungsmodul (102) in Kommunikation mit dem Lastverwaltungsprozessor zum Messen der Übertragungsleistungsindikatoren für laufende Anrufe,
wobei der Lastverwaltungsprozessor (101) dazu eingerichtet ist, einen aktuellen Übertragungslastlevel auf dem Pfad auf der Basis der gemessenen Übertragungsleistungsindikatoren zu bestimmen und den Einschränkungsfaktor für den Pfad zu aktualisieren, wobei der aktualisierte Einschränkungsfaktor die Anzahl von neuen Anrufen, die den Pfad benutzen dürfen, auf einen zweiten vorbestimmten Level beschränkt, der sich von dem ersten vorbestimmten Level unterscheidet, **dadurch gekennzeichnet, dass** der Lastverwaltungsprozessor dazu eingerichtet ist, den Einschränkungsfaktor durch Hinzufügen eines Anpassungswertes zu aktualisieren, der von dem Unterschied zwischen dem ersten Verkehrslastlevel und dem aktuellen Verkehrslastlevel abhängt.

8. Anordnung nach Anspruch 7, des Weiteren ein erstes Speichermedium (104) in Kommunikation mit dem Lastverwaltungsprozessor (101) des ersten Speichermediums aufweisend, das Daten enthält, die sich auf den Einschränkungsfaktor beziehen, wobei der Lastverwaltungsprozessor dazu eingerichtet ist, auf das erste Speichermedium (104) unter Verwendung des aktuellen Verkehrslastlevels und des ersten Übertragungslastlevels zuzugreifen und den aktualisierten Einschränkungsfaktor unter Verwendung von Daten zu erzeugen, die in dem Speichermedium enthalten sind, wobei vorzugsweise das erste Speichermedium eine Tabelle (104) umfasst, welche die Einschränkungsfaktor-Anpassungswerte enthält, wobei der Lastverwaltungsprozessor (101) auf die Tabelle zugreifen kann, und der Lastverwaltungsprozessor (101) dazu eingerichtet ist, die Tabelle unter Verwendung der aktuellen Lastkategorie und der vorhergehenden Lastkategorie zu adressieren.

9. Anordnung nach Anspruch 7 oder 8, des Weiteren beinhaltend ein zweites Speichermedium zum Speichern einer Tabelle (105), welches Einschränkungsfaktorwerte für jeden überwachten Pfad enthält, wobei der Lastverwaltungsprozessor (101) und der Rufsteuerungsprozessor (106) auf die Pfadeinschränkungstabelle zugreifen können, wobei der Lastverwaltungsprozessor (101) dazu eingerichtet ist, die Tabelle durch Ersetzen des Einschränkungsfaktorwertes mit dem aktualisierten Einschränkungsfaktorwert zu aktualisieren, und wobei der Anrufsteuerungsprozessor (106) dazu eingerichtet ist, die Tabelle bei Empfang eines eingehenden Anrufs zu konsultieren, um den Einschränkungsfaktor für den Pfad zu erhalten, den der Anruf anfordert, und wobei vorzugsweise der Lastverwaltungsprozessor (101) des Weiteren dazu eingerichtet ist, einen aktuellen Übertragungslastlevel für jeden Pfad in die Pfadeinschränkungstabelle (105) zu schreiben.

10. Anordnung nach einem der Ansprüche 7 bis 9, wobei der Lastverwaltungsprozessor und der Anrufsteuerungsprozessor in einer einzelnen Verarbeitungsvorrichtung ausgebildet sind und wobei vorzugsweise das Datenmessungsmodul innerhalb der einzelnen Verarbeitungsvorrichtung enthalten ist.

11. Anordnung nach einem der Ansprüche 7 bis 10, wobei ein Übertragungslastlevel als eine einer Vielzahl von Lastkategorien ausgedrückt wird, wobei jede Lastkategorie einen Lastzustand auf dem Pfad angibt und durch einen Bereich von Übertragungsleistungsindikatorwerten definiert ist.

12. Anordnung nach einem der Ansprüche 7 bis 11, wobei das Datenmessungsmodul (102) dazu eingerichtet ist, Jitter und Paketverlust für laufende Anrufe zu messen, und wobei der Lastverwaltungsprozessor (101) dazu eingerichtet ist, zu bestätigen, ob Paketverlust unterhalb eines vorbestimmten Levels liegt, und einen aktuellen Übertragungslastlevel auf dem Pfad allein auf der Basis des gemessenen Jitter zu bestimmen, wenn Paketverlust unterhalb des vordefinierten Levels liegt.

## Revendications

1. Procédé de contrôle de l'admission d'appels sur au moins un chemin dans un réseau commuté par paquets, ledit procédé comprenant les étapes suivantes :
l'application d'un facteur de restriction à des appels utilisant ledit chemin, ledit facteur de restriction ayant une plage d'au moins trois valeurs possibles et restreignant le nombre de nouveaux appels autorisés à utiliser ledit chemin à un premier niveau prédéterminé, et étant fixé sur la base d'un premier niveau de volume de trafic sur ledit chemin ;
la mesure d'indicateurs de performance de transmission pour des appels en cours sur ledit chemin afin de déterminer un niveau actuel de volume de trafic sur ledit chemin ;
la détermination d'un facteur de restriction mis à jour sur la base dudit niveau de volume de trafic actuel déterminé, et l'application dudit facteur de restriction mis à jour à des appels utilisant ledit chemin, ledit facteur de restriction mis à jour restreignant le nombre de nouveaux appels autorisés à utiliser ledit chemin à un deuxième niveau prédéterminé, dans lequel ledit deuxième niveau prédéterminé est différent dudit premier niveau prédéterminé, **caractérisé en ce que** ladite étape de détermination d'un facteur de restriction mis à jour comprend en outre l'étape d'ajustement dudit facteur de restriction en ajoutant une valeur d'ajustement pour obtenir ledit facteur de restriction mis à jour, ladite valeur d'ajustement étant dépendante de la différence entre ledit premier niveau de volume de trafic et ledit niveau de volume de trafic actuel.

2. Procédé tel que revendiqué par la revendication 1, dans lequel l'étape de mesure d'indicateurs de performance de transmission pour des appels en cours sur ledit chemin comprend la mesure desdits indicateurs de performance de transmission pour des appels en cours pour une période de temps prédéterminée et la détermination dudit niveau de volume de trafic actuel à la fin de ladite période de temps prédéterminée.

3. Procédé tel que revendiqué par la revendication 1, dans lequel ladite étape d'ajustement dudit facteur de restriction comprend :
l'utilisation d'un tableau contenant des valeurs d'ajustement de facteur de restriction, chaque valeur dans ledit tableau étant adressable avec ledit premier niveau de volume de trafic et ledit niveau de volume de trafic actuel, et l'ajout de ladite valeur d'ajustement audit facteur de restriction pour obtenir ledit facteur de restriction mis à jour.

4. Procédé tel que revendiqué par l'une quelconque des revendications 1 à 3, dans lequel la gigue ou la perte de paquets est utilisée en tant qu'indicateur de performance de transmission, et dans lequel la gigue ou la perte de paquets sont de préférence utilisées en tant qu'indicateurs de performance de transmission, et dans lequel la gigue est utilisée pour déterminer le niveau de volume de trafic lorsque la perte de paquets est en-dessous d'un niveau prédéterminé.

5. Procédé tel que revendiqué par l'une quelconque des revendications précédentes, dans lequel ledit niveau de volume de trafic est exprimé en tant qu'une parmi une pluralité de catégories, chaque catégorie de volume étant définie par une plage de valeurs d'indicateur de performance de transmission et indiquant un état du volume de trafic, et dans lequel la catégorie de volume dudit chemin est de préférence déterminée séparément en utilisant des mesures de la gigue et de la perte de paquets, et la catégorie de volume la plus mauvaise étant sélectionnée en tant que la catégorie de volume.

6. Procédé tel que revendiqué par l'une quelconque des revendications précédentes, dans lequel ledit facteur de restriction est un facteur de restriction en pourcentage qui détermine le pourcentage d'appels autorisés à utiliser le chemin de transmission, et dans lequel le facteur de restriction r a de préférence une valeur de 0 à 100 et dans lequel une moyenne de r-100 nouveaux appels entrants sur 100 sont autorisés à utiliser le chemin surveillé, ou dans lequel ledit facteur de restriction est un facteur de restriction de niveau de trafic qui détermine le nombre maximal d'appels autorisés à utiliser le chemin surveillé à n'importe quel moment, ou dans lequel le facteur de restriction est un facteur de restriction incrémentiel de niveau de trafic maximal qui détermine le nombre d'appels pouvant être réglés au cours d'une certaine période de temps.

7. Agencement pour contrôler l'admission d'appels sur au moins un chemin dans un réseau commuté par paquets, ledit agencement comprenant :
un processeur de gestion de volume (101) adapté pour affecter un facteur de restriction à des appels utilisant ledit chemin, ledit facteur de restriction étant en lien avec un premier niveau de volume de transmission sur ledit chemin et ayant une plage d'au moins trois valeurs possibles,
un processeur de contrôle d'appels (106) adapté pour restreindre le nombre de nouveaux appels autorisés à utiliser ledit chemin à un premier niveau prédéterminé défini par ledit facteur de restriction ; et
un module de mesure de données (102) en communication avec ledit processeur de gestion de volume pour mesurer des indicateurs de performance de transmission pour des appels en cours,
dans lequel ledit processeur de gestion de volume (101) est adapté pour déterminer un niveau de volume de transmission actuel sur ledit chemin sur la base desdits indicateurs de performance de transmission mesurés et pour mettre à jour ledit facteur de restriction pour ledit chemin, dans lequel ledit facteur de restriction mis à jour restreint le nombre de nouveaux appels autorisés à utiliser ledit chemin à un deuxième niveau prédéterminé qui est différent dudit premier niveau prédéterminé, **caractérisé en ce que** ledit processeur de gestion de volume est adapté pour mettre à jour ledit facteur de restriction grâce à l'ajout d'une valeur d'ajustement qui est dépendante de la différence entre ledit premier niveau de volume de trafic et ledit niveau de volume de trafic actuel.

8. Agencement tel que revendiqué par la revendication 7, comprenant par ailleurs un premier support d'enregistrement (104) en communication avec ledit processeur de gestion de volume (101), ledit premier support d'enregistrement contenant des données relatives audit facteur de restriction, ledit processeur de gestion de volume étant adapté pour accéder audit premier support d'enregistrement (104) en utilisant ledit niveau de volume de transmission actuel et ledit premier niveau de volume de transmission et pour générer ledit facteur de restriction mis à jour en utilisant des données contenues dans ledit support d'enregistrement, dans lequel ledit premier support d'enregistrement comprend de préférence un tableau (104) contenant lesdites valeurs d'ajustement du facteur de restriction, ledit tableau étant accessible par ledit processeur de gestion de volume (101), et ledit processeur de gestion de volume (101) étant adapté pour adresser ledit tableau en utilisant ladite catégorie de volume actuelle et ladite catégorie de volume précédente.

9. Agencement tel que revendiqué par la revendication 7 ou 8, comprenant par ailleurs un deuxième support d'enregistrement pour enregistrer un tableau (105) contenant des valeurs de facteur de restriction pour chaque chemin supervisé, ledit tableau de restriction de chemin étant accessible par ledit processeur de gestion de volume (101) et ledit processeur de contrôle d'appels (106), dans lequel ledit processeur de gestion de volume (101) est adapté pour mettre à jour ledit tableau en remplaçant ladite valeur de facteur de restriction par ladite valeur de facteur de restriction mise à jour, et dans lequel ledit processeur de contrôle d'appels (106) est adapté pour consulter ledit tableau à réception d'un appel entrant pour obtenir le facteur de restriction pour le chemin requis par ledit appel, et dans lequel ledit processeur de gestion de volume (101) est en outre de préférence adapté pour écrire un niveau de volume de transmission actuel pour chaque chemin dans ledit tableau de restriction de chemin (105).

10. Agencement tel que revendiqué par l'une quelconque des revendications 7 à 9, dans lequel ledit processeur de contrôle de volume et ledit processeur de contrôle d'appels sont formés par un dispositif de traitement unique, et dans lequel ledit module de mesure de données est de préférence compris à l'intérieur dudit dispositif de traitement unique.

11. Agencement tel que revendiqué par l'une quelconque des revendications 7 à 10, dans lequel un niveau de volume de transmission est exprimé en tant qu'une d'entre une pluralité de catégories de volume, dans lequel chaque catégorie de volume indique un état du volume sur ledit chemin et est définie par une plage de valeurs d'indicateur de performance de transmission.

12. Agencement tel que revendiqué par l'une quelconque des revendications 7 à 11, dans lequel ledit module de mesure de données (102) est adapté pour mesurer la gigue et la perte de paquets pour des appels en cours, et dans lequel ledit processeur de gestion de volume (101) est adapté pour s'assurer que la perte de paquets est inférieure à un niveau prédéfini, et pour déterminer un niveau de volume de transmission actuel sur ledit chemin sur la base de ladite gigue mesurée à elle seule lorsque la perte de paquets est inférieure audit niveau prédéfini.
